# EUROPEAN PATENT APPLICATION

(11) **EP 4 086 811 A1**
(43) Date of publication of application: **09.11.2022**
(21) Application number: 20910993.3
(22) Date of filing: 12.10.2020
(51) Int. Cl.: G06K 9/62, G06K 9/00, G06K 9/46, G06N 3/08

(54) **PROBLEMATIC BEHAVIOR CLASSIFICATION SYSTEM AND METHOD BASED ON DEEP NEURAL NETWORK ALGORITHM**

(30) Priority: 31.12.2019 KR 20190179603
(71) Applicant: Gwangju Institute of Science and Technology, Gwangju 61005 (KR)
(72) Inventor: KIM, Mun Sang, Gwangju 61005 (KR); LEE, Deok Won, Daejeon 35262 (KR); LEE, Sang Hyub, Goheung-gun, Gyeongsangnam-do 59511 (KR); JUN, Kook Sung, Incheon 21368 (KR)
(74) Representative: Botti, Mario
(86) International application number: PCT/KR2020/013867
(87) International publication number: WO 2021/137395

(57) **Abstract**

A method of classifying an abnormal behavior based on a deep neural network algorithm according to an exemplary embodiment of the present invention includes: measuring and classifying a feedback behavior of an experiment target with respect to conditional stimulus information predefined in a database in a limited environment and storing the classified feedback behavior in the database; presenting, by a stimulus transmitting unit, the conditional stimulus to the target; acquiring, by a stimulus measuring unit, data for a feedback behavior response of the experiment target with respect to the conditional stimulus; and classifying an abnormal behavior among human body data for the feedback behavior responses by using a deep neural network algorithm.

## Description

### TECHNICAL FIELD

The present invention relates to a system and a method of classifying an abnormal behavior based on a deep neural network algorithm.

### BACKGROUND ART

Recent advances in ubiquitous technology have enabled high-speed networks, high-performance computers, and sensors for various purposes. In order to apply these high-performance devices to real life, various techniques have been researched for placing various sensors in necessary positions, receiving corresponding information through a high-speed network, and effectively analyzing a high-performance computer. Among the various fields studied for this purpose, research to detect an abnormal behavior by analyzing a human behavior is being actively conducted.

### SUMMARY OF THE INVENTION

The present invention has been made in an effort to solve the foregoing problems, and an object of the present invention is to provide a system and a method of classifying an abnormal behavior based on a deep neural network algorithm.

An exemplary embodiment of the present invention provides a method of classifying an abnormal behavior based on a deep neural network algorithm, the method including: measuring and classifying a feedback behavior of an experiment target with respect to conditional stimulus information predefined in a database in a limited environment and storing the classified feedback behavior in the database; presenting, by a stimulus transmitting unit, the conditional stimulus to the target; acquiring, by a stimulus measuring unit, data for a feedback behavior response of the experiment target with respect to the conditional stimulus; and classifying an abnormal behavior among human body data for the feedback behavior responses by using a deep neural network algorithm.

An exemplary embodiment of the present invention provides a system for classifying an abnormal behavior based on a deep neural network algorithm, the system including: a stimulus transmitting unit configured to present conditional stimulus information to an experiment target; a stimulus measuring unit configured to collect feedback behavior response information of the experiment target with respect to the conditional stimulus; and a deep learning information processing unit configured to provide the conditional stimulus information to the stimulus transmitting unit, receive the feedback behavior response information collected by the stimulus measuring unit, and classify an abnormal behavior among the feedback behavior responses by using a deep neural network algorithm.

By using the system and the method of classifying an abnormal behavior based on a deep neural network algorithm according to the exemplary embodiments of the present invention, a result is derived by learning a large amount of data based on a deep neural network algorithm, so that there is an advantage of being able to objectively classify abnormal behaviors.

Further, there is an advantage in that it is possible to classify various abnormal behaviors in a content environment.

Furthermore, there is an advantage in that it is possible to easily construct a new definition of an unclassified abnormal behavior through learning in modifying a abnormal behavior to be detected.

### BRIEF DESCRIPTION OF THE DRAWINGS

FIG. 1 is a block diagram illustrating a system for classifying an abnormal behavior based on a deep neural network algorithm according to an exemplary embodiment of the present invention.
FIGS. 2 to 4 are diagrams illustrating an example of feedback behavior information of an experimental object for conditional stimulus information.
FIG. 5 is a flow diagram of an example of an operation of the deep neural network algorithm illustrated in FIG. 1.
FIG. 6 is a flowchart illustrating a method of classifying an abnormal behavior based on a deep neural network algorithm according to an exemplary embodiment of the present invention.
FIG. 7 is a flowchart illustrating operation S740 illustrated in FIG. 6 in more detail.
FIG. 8 is a diagram illustrating an example of a computing environment in which one or more exemplary embodiments described in the present specification are implementable.

### DETAILED DESCRIPTION

Hereinafter, an exemplary embodiment of the present specification will be described with reference to the accompanying drawings. However, it is not intended to limit the technology described in the document, and it should be understood to include various modifications, equivalents, and/or alternatives of the exemplary embodiments of the present document. In connection with the description of the drawings, like reference numerals may be used for like constituent components. In the present specification, expressions, such as "have," "may have," "include," or "may include", indicate the presence of a corresponding characteristic (for example,, a numerical value, function, operation, or constituent element, such as a component), and do not exclude the presence of additional features.

In the present document, each of the terms, such as "A or B", "at least one of A and B", "at least one of A or B", "A, B, or C", "at least one of A, B, and C", and "at least one of A, B, or C", may include all possible combinations of items listed together in the corresponding one of the phrases. For example, "A or B", "at least one of A and B", or "at least one of A or B" may indicate all of (1) the case of including at least one A, (2) the case of including at least one B, or (3) the case of including at least one A and at least one B.

Terms, such as "a first", "a second", or "first" or "second", used in the present specification may modify various elements, regardless of order and/or importance, and is used to distinguish one constituent element from other constituent elements and does not limit the constituent element. For example, a first user device and a second user device may represent different user devices regardless of order or importance. For example, without departing from the scope of the rights described herein, the first constituent element may be referred to as the second constituent element, and similarly, the second constituent element may also be renamed as the first constituent element.

When it is referred that one (for example, a first) constituent element is "coupled" or "connected" to another constituent element (for example, a second) with or without the terms "functionally" or communicatively", it means that the one constituent element can be connected to the another constituent element directly (for example, by wire), wirelessly, or through a third constituent element. By contrast, when one constituent element (for example, a first constituent element) is referred to as being "directly coupled to" or "directly connected to" another constituent element (for example, a second constituent element), it should be understood that there are no intervening constituent element (for example, a third constituent element) between the one constituent element and the another constituent element.

As used herein, the expression "configured to (or set to)" may be used interchangeably with "suitable for", "having the capacity to", "designed to", "adapted to", "made to", or "capable of' depending on the situation. The term "configured to (or set to)" does not necessarily mean only "specifically designed to" in hardware. Instead, in some circumstances, the expression "a device configured to" may mean that the device is "capable of doing" with other devices or components.

For example, a processor configured to perform (or set to perform) A, B, and C" refers to a processor (for example, an embedded processor) dedicated to performing the corresponding operation, or a generic-purpose processor (for example, a CPU or an application processor) capable of performing the corresponding operations by executing one or more software programs stored in a memory device.

The terms used herein are used only to describe specific exemplary embodiments, and may not be intended to limit the scope of other exemplary embodiments. A singular expression includes a plural expression unless it is specifically described to the contrary in the context. All terms used herein including technical or scientific terms have the same meanings as meanings which are generally understood by those skilled in the art unless they are differently defined. Terms defined in generally used dictionary shall be construed that they have meanings matching those in the context of a related art, and shall not be construed in ideal or excessively formal meanings unless they are clearly defined in the present application. In some cases, even the terms defined in this specification cannot be construed to exclude the embodiments of the present specification.

Hereinafter, a system and a method of classifying an abnormal behavior based on a deep neural network algorithm according to an exemplary embodiment of the present invention will be described in more detail based on the accompanying drawings.

First, the present invention is an invention for use in object people with abnormal behavior disorders, such as Attention Deficit Hyperactivity Disorder (ADHD) diagnosis, and ADHD is defined by the American Psychiatric Association as "a condition in which developmentally inadequate attention, abnormal activeness, and impulsive tendencies are severe and persistent, significantly affecting a child's daily life".

Herein, the causes of ADHD may be symptoms caused by complex characteristics of the interaction between neurological, chemical, and other anatomical, genetic, and environmental factors.

To unify diagnostic criteria for ADHD, the American Academy of Pediatrics has developed diagnostic guidelines for pediatricians to evaluate children referred to for attention deficit, hyperactivity, impulsivity and learning difficulties or behavioral problems.

Behaviors that meet the diagnostic criteria for ADHD are specified in the Diagnostic and Statistical Manual of Mental Disorders IV (DSM-IV), and the criteria for ADHD include a total of 18 behavioral symptoms consisting of 9 inattentive behavioral traits and 9 hyperactive and impulsive traits.

Children who show distinct symptoms among 18 behaviors and match at least 6 of the 9 behaviors in each type are more likely to be diagnosed with ADHD

The system and the method of classifying an abnormal behavior based on the deep neural network algorithm desired to be described in the present invention is the invention which presents conditional stimulus information to an experimental target, classifies feedback response information of the experimental target to the conditional stimulus information into a normal behavior and an abnormal behavior within a predetermined category in a database, and includes a behavior that does not correspond to the defined category as a new behavior definition within an existing abnormal behavior through an advice of an expert.

Herein, the system for classifying an abnormal behavior based on the deep neural network algorithm may classify the feedback response information based on the deep neural network algorithm that is a deep learning algorithm.

For reference, deep learning is defined as a set of machine learning algorithms that attempt high-level abstractions through a combination of several nonlinear transformation methods, and may be a branch of machine learning that teaches computers how to think in a broad sense.

The deep learning may be a machine learning technology established based on an Artificial Neural Network (ANN) to allow computer to learn by themselves like humans by using multiple pieces of data. Deep learning may train a machine so that a computer distinguishes objects by mimicking the information processing method that the human brain discovers patterns in numerous data and then divides objects. When the deep learning technology is applied, computers may recognize, infer, and determine an object by itself even if humans do not set all the criteria for determination. The deep learning technology may be broadly used in voice and image recognition, picture analysis, and the like.

In the machine learning, the machine analyzes massive sample data, repeats training data, extracts rules, regulations, expressions, conditions, determination criteria, and the like by itself, and accumulates the extracted ones in a database for learning. When data requiring recognition and analysis is input, the machine may analyze and identify data based on the accumulated database, think and predict relationship, and replace a "thinking" task that humans normally do.

A neural network is a type of machine learning, and may be a technology that mimics the human brain. The neural network may extract a 'feature value' of an object and learn the extracted feature value in a way similar to that of a human. For example, human brains have learned and have 'features' for determining whether an object is a dog or a cat through the experiences so far, and based on the features, human may see some images and classify the images into 'dog' and 'cat'.

In the neural network, a feature value may be calculated rather than a human-suggested rule to identify an object. When the feature value is taught as 'dog', the neural network may classify the target as a dog. When this is repeated, the machine may calculate the feature value by itself, thereby increasing the amount of information that may be classified as a dog. The feature value handled by the computer may be a number in the form of a vector. Because the features are automatically learned by the machine through training, developers may be freed from the traditional task of defining detailed rules. If an image is input and the image matches, the machine may determine that the image is a cat and classify the image to the cat. The feature value for determining the image as a dog is not created and provided by a human, but a machine is capable of calculating the feature value by itself through learning.

The neural network may include an input layer, an output layer, and an intermediate layer. The intermediate layer may be called a hidden layer. The presence of the intermediate layer may increase the layer of the group of neurons responsible for processing. A neural network having a multi-layered neural layer in the intermediate layer may be called a deep neural network. Machine learning performed in the deep neural network may be called deep learning. The intermediate layer may be further multi-layered to train and process more data. When the middle layer is excessively multi-layered, the number of parameters becomes too large, and the number of neurons becomes many and complicated, which may lead to over-fitting by increasing unrelated connections. Over-fitting can degrade performance. The Convolutional Neural Network (CNN) may solve the problem.

The CNN network is a type of multilayer perceptron designed to use minimal preprocessing. The CNN consists of one or several convolutional layers and general artificial neural network layers placed on the convolutional layers, and may additionally utilize weights and pooling layers. The CNN may sufficiently utilize input data having a two-dimensional structure. Compared with other deep learning structures, CNN may show good performance in both video and voice fields. The CNN may also be trained through standard reverse transfer. The CNN has advantages in that it is more easily trained than other feed-forward artificial neural network techniques and fewer parameters are used.

The CNN may analyze some regions of an image, slide and move a window of the region, and iterate to the next region and then to the next region. Recognized image region information is not propagated to all neurons, but may be propagated only to neurons with high relationships. Through this, it is possible to solve the over-fitting problem.

A recurrent neural network (RNN), which shows high performance in time series data analysis, may include an input layer, an intermediate layer, and an output layer, and a current value of the intermediate layer may affect the calculation of a next output layer. The RNN may be a type of artificial neural network in which a node in the intermediate layer is connected by an edge having a direction to form a directed cycle. The core of the RNN may be to find optimal parameters between nodes and layers. The RNN may be extended to a bidirectional RNN. When the bidirectional RNN models ordinal data, the current ordinal data may be influenced by pre-data as well as post-data. Unlike the unidirectional RNN that refers only to pre-data and current data, the bidirectional RNN may refer to both pre-data and post-data and current data.

The time series data may be data in which observation values are recorded at regular intervals with the lapse of time. Time series data analysis techniques may be used in many fields, such as finance, military, and manufacturing. Accurate analysis of time series data may be very important for financial forecasting, manufacturing diagnostics, and the like. For example, when a signal input from a large system of a power plant is accurately predicted, it is possible to reduce the risk of accidents by predicting failures and accurately calculating maintenance intervals, as well as significantly reducing maintenance costs. Multiple time series data may be a record of multiple variables that change over time.

For example, multiple time series data may contain changes in multiple stock prices over time, multiple exchange rates over time. Time series data may be persistent. For example, people may understand each word based on previous words, and previous video frames may affect the understanding of the current frame. Unlike static data, time series data may have multiple characteristics. For example, there may be time series data that changes relatively smoothly over time, and there may be time series data that changes rapidly (high frequency). Further, there may be time series data that repeat a specific pattern.

With the development of deep learning technology, not only static data, but also time series data may be analyzed and predicted. In order to obtain reliable analysis and prediction results through deep learning of time series data, there may be a limitation that a large amount of training data is required. Realistically, it may be difficult to obtain a lot of data or it may take a long time. It is explained in advance that the appropriate deep learning algorithm may be different for each time series data.

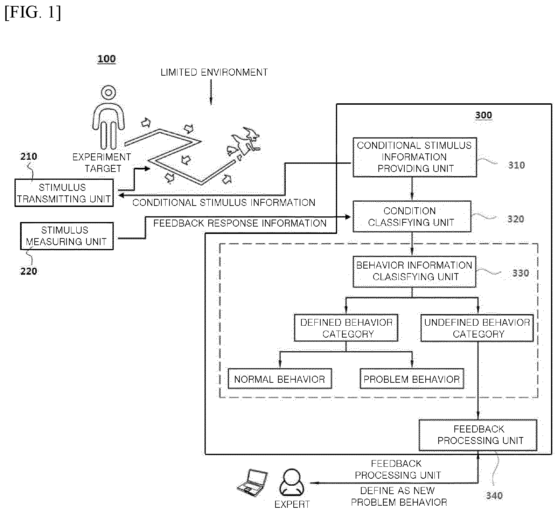

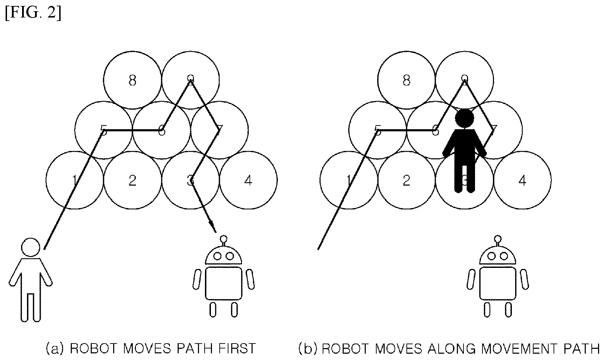

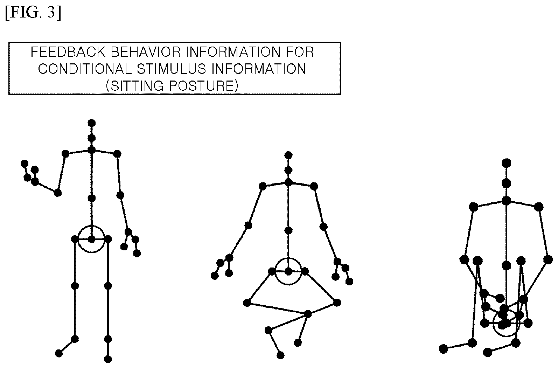

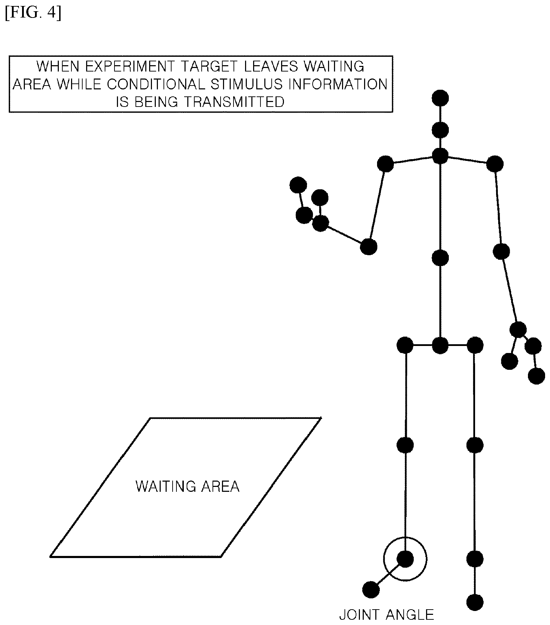

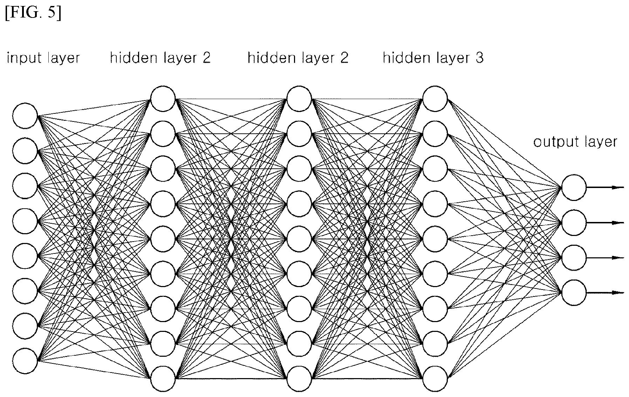

FIG. 1 is a block diagram illustrating a system for classifying an abnormal behavior based on a deep neural network algorithm according to an exemplary embodiment of the present invention, FIGS. 2 to 4 are diagrams illustrating an example of feedback behavior information of an experimental object for conditional stimulus information, and FIG. 5 is an a flow diagram of an example of an operation of the deep neural network algorithm illustrated in FIG. 1.

As illustrated in FIG. 1, the system 100 for classifying an abnormal behavior based on a deep neural network algorithm according to an exemplary embodiment of the present invention may include a stimulus transmitting unit 210, a stimulus measuring unit 220, and a deep learning information processing server 300.

Herein, the stimulus transmitting unit 210 and the stimulus measuring unit 220 may be in a form that can be combined.

The stimulus transmitting unit 210 and the stimulus measuring unit 220 are mobile terminals within a limited environment or fixed terminals at a location set by a manager, and for example, may correspond to a device, such as, mobile and stationary robots, smart TVs, and projectors, capable of displaying images.

The stimulus transmitting unit 210 is a terminal that receives the conditional stimulus information provided from the deep learning information processing server 300 and then presents the conditional stimulus information to an experiment target subject, and the stimulus transmitting unit 210 may instruct the experiment target to perform an action, and provide instructions through physical actions and content-based instruction information on the screen.

The stimulus measuring unit 220 may be a terminal that measures feedback behavioral response information of the experiment target to the conditional stimulus for a preset time, and records and stores the measured feedback behavior response information.

Here, the stimulus measuring unit 220 may collect and record the feedback response information of the experiment target as a correct response/an incorrect response before a correct response/an incorrect response/a correct response before an incorrect response for each conditional stimulus information presented to the experiment target.

Examples of the correct response/the incorrect response before the correct response/the incorrect response/the correct response before the incorrect response will be described below.

The stimulus measuring unit 220 may be combined with a robot, various sensors installed in the environment, and a configuration for inputting subjective determination information (facilitator input information) of a moderator. Herein, the subjective determination information may include information that is difficult to be provided with prepared measurement data.

An example of subjective determination information corresponds to information that is difficult to measure with an existing sensor, such as facial expression information or eye contact information of children.

The stimulus measuring unit 220 may collect human body data (kinetic information) that is the feedback behavior response information by using at least one of a three-dimensional depth sensor, a two-dimensional camera, an ultrasonic sensor, an infrared sensor, a laser scanner, a microphone, a position recognition sensor, and a motion recognition sensor, and transmit the collected human body data to the deep learning information processing server 300 which is to be described below.

Herein, the conditional stimulus information may be indication information in which at least one or more of location information, object designation information, sound indication information, color indication information, and behavior indication information in a limited environment are combined or arranged.

Examples of the conditional stimulus information may include "Follow the road and stop at the arrow", "Sit with your right hand up", "If you see a witch, sit down", "Sit in the circle with the largest number", and "Pick a red flag, a blue flag, then a yellow flag in order".

The stimulus measuring unit 220 separates, collects, and records the feedback information of the experiment target for the conditional stimulus information into the correct response/the incorrect response before the correct response/the incorrect response/the correct response before the incorrect response.

For example, assuming that the conditional stimulus information is "Sit when you see a witch, and wave your hand when you see your friends", the correct response/incorrect response may be an unclear sitting posture or an action not to wave your hand.

The incorrect response before the correct response/the incorrect response before the incorrect response refers to the behavior in which the experiment target modifies the feedback response.

For example, the incorrect response before the correct response/the incorrect response before the incorrect response means waving a hand while trying to sit down, or sitting while trying to wave a hand.

In the meantime, the stimulus transmitting unit 210 and the stimulus measuring unit 220 may analyze the image information of the experiment target transmitted from the deep learning information processing server 300 based on the object recognition algorithm and move to the experiment target matched with the image information.

Further, the stimulus measuring unit 220 may measure a game progress time performed in a limited space, a reaction time to the conditional stimulus information, a distance traveled by the experiment target during a game played in a limited space, and the like.

Further, the stimulus measuring unit 220 may record the collected human body data, which is the feedback behavior response information of the test subject, in a time series or non-time series manner.

Next, the deep learning information processing unit 300 performs a function of providing the conditional stimulus information to the stimulus transmitting unit 210, receiving the feedback behavior response information of the experiment target collected by the stimulus measuring unit 220, and classifying the abnormal behavior among the feedback behavior responses by using the deep neural network algorithm.

The deep learning information processing unit 300 may include a conditional stimulus information providing unit 310, a condition classifying unit 320, a behavior information classifying unit 330, and a feedback processing unit 340.

The conditional stimulus information providing unit 310 provides conditional stimulus information suitable for the individual characteristics of the experiment target to the stimulus transmitting unit 210.

The condition classifying unit 320 sub-classifies the behavior information in the feedback response information of the experiment target into conditions in the conditional response information. The sub-classified behavior information is provided to the behavior information classifying unit 330 which is to be described below.

The behavior information classifying unit 330 determines time-series or non-time-series relationship of the behaviors sub-classified by the condition classifying unit by using a deep neural network algorithm, and then determines whether the sub-classified behaviors are included in a defined behavior category consisting of detailed conditions within the conditional stimulus information set in a database, and classifies the feedback behavior response information as a defined behavior and an undefined behavior (anomaly detection).

Further, the behavior information classifying unit 330 may classify the detailed behaviors into a normal behavior and an abnormal behavior by comparing the detailed behaviors in the feedback behavior response and behaviors in a defined behavior category.

Next, the feedback processing unit 340 may be the configuration of providing information classified as the undefined behavior among the feedback behavior responses of the experiment target to an external terminal (expert's terminal), receiving a feedback of definition information of the feedback behavior response that is the undefined behavior from the external terminal (expert's terminal), and additionally defining the definition information of the feedback behavior response as new abnormal behavior in the defined behavior category in the database.

Herein, the predefined behavior categories are classified into a predefined normal behavior category and a predefined abnormal behavior category, and the normal behavior category and abnormal behavior category may be categories of predictable behaviors of the experts.

For example, when it is assumed that the conditional stimulus information is "(2) Follow ① the road, and ④ Stop ③ at the arrow", the normal behavior category may be a behavior that satisfies the four conditional information, and the abnormal behavior category may be a behavior when at least one or more of the four conditional information is included in another predictable condition. For example, the behavior included in the abnormal behavior category may be the case where a person goes round and round the road and stop in a circle.

For another example, when it is assumed that the conditional stimulus information is "If you ②see ①a witch, ③sit down", the normal behavior category is an action that satisfies the three conditional information, and the abnormal behavior category may be a behavior when at least one or more of the three conditional information is included in another predictable condition. For example, the behavior included in the abnormal behavior category may be the case where a person waves the hand when seeing a witch instead of sitting down.

Further, when it is assumed that the conditional stimulus information is 'Sit when you see a witch, and wave your hand when you see your friends', the correct response/incorrect response may be an ambiguous sitting or not waving the hand.

The incorrect response before the correct response/the incorrect response before the incorrect response refers to the behavior in which the experiment target modifies the feedback response.

For example, the incorrect response before the correct response/the incorrect response before the incorrect response means waving a hand while trying to sit down, or sitting while trying to wave a hand.

Next, the undefined behavior category is a category of behaviors that experts cannot predict, and for example, when it is assumed that the conditional stimulus information is ② Follow ① the road and ④ stop ③ at the arrow", the undefined behavior category may be the behavior of the experiment target sitting down on the road or lying face down on the road.

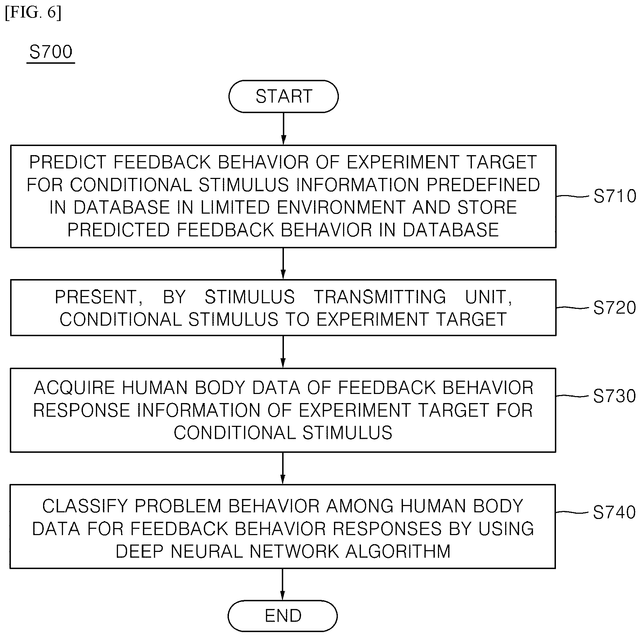

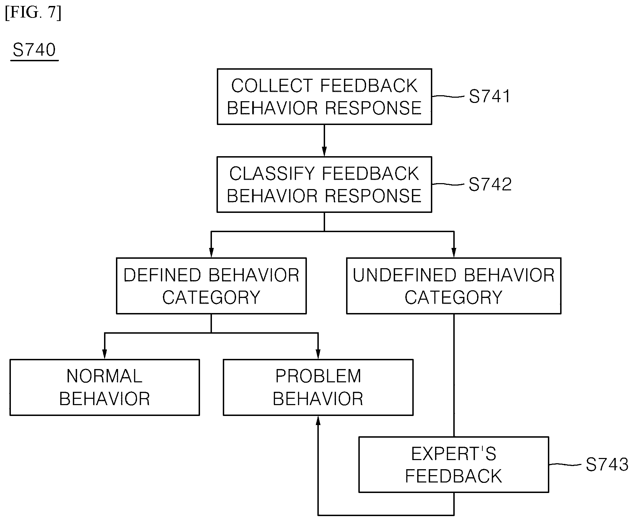

FIG. 6 is a flowchart illustrating a method of classifying an abnormal behavior based on a deep neural network algorithm according to an exemplary embodiment of the present invention, and FIG. 7 is a flowchart illustrating operation S740 illustrated in FIG. 6 in more detail.

Referring to FIG. 6, a method S700 of classifying an abnormal behavior based on a deep neural network algorithm according to an exemplary embodiment of the present invention may be implemented through the system for classifying an abnormal behavior based on the deep neural network algorithm illustrated in FIG. 1.

More particularly, the method S700 of classifying an abnormal behavior based on a deep neural network algorithm according to the exemplary embodiment of the present invention first measures and classifies a feedback behavior of an experiment target for conditional stimulus information predefined in a database in a limited environment and stores the classified feedback behavior in the database (S710).

Herein, the conditional stimulus information may be indication information in which at least one or more of location information, object designation information, sound indication information, color indication information, and behavior indication information in a limited environment are combined or arranged.

Examples of the conditional stimulus information may include "Follow the road and stop at the arrow", "Sit with your right hand up", "If you see a witch, sit down", "Sit in the circle with the largest number", and "Pick a red flag, a blue flag, then a yellow flag in order".

Further, the measurement and classification information for a feedback behavior may be behavioral information within a predictable category (normal category) through the presented conditional stimulus information.

For example, when the conditional stimulus information is presented to the experiment target 'Go along the road and stop at the arrow', the behavioral information within the predictable category (normal category) may be classified into ① a behavior not following the road, ② a behavior only following the road, ③ a behavior sitting on the road, ④ a behavior lying down on the road, and (5) a behavior moving arrows around.

Herein, the predictable category (normal category) may be a behavioral domain including a behavior that satisfies at least one of several conditional information included in the conditional stimulus information.

Then, when operation S710 is complete, the stimulus transmitting unit 210 transmits or presents the conditional stimulus information provided by the deep learning information processing unit 300 to the experiment target (S720).

For reference, the stimulus transmitting unit 210 may include at least one device capable of outputting the conditional stimulus information (for example, instruction information in which at least one or more of location information, object designation information, sound indication information, color indication information, and behavior indication information in a limited environment are combined or arranged).

The feedback behavioral response information collected by the stimulus measuring unit 220 may include at least one of joint data, depth data, color data, sound data, and position data, and merged information in which data output from a plurality of sensors is combined, and also may include subjective determination information of the moderator (information input by the moderator). Herein, the subjective determination information may include information that is difficult to be provided with prepared measurement data.

When operation S720 is completed, the stimulus measuring unit 220 acquires human body data on the feedback behavioral response of the experiment target to the conditional stimulus, and provides the acquired human body data on the feedback behavioral response to the deep learning information processing server 300 (S730).

The deep learning information processing server 300 classifies the abnormal behavior among the human body data for the feedback behavioral responses by using the deep neural network algorithm (S740).

Herein, referring to FIG. 7, operation S740 includes the information collecting operation S741, the behavior classifying operation S742, and the feedback operation S743.

The information collecting operation S741 may be the operation of collecting human body data on the feedback behavioral response of the experiment target transmitted from the stimulus measuring unit 200.

In the behavior classifying operation S742, after whether the detailed behaviors in the feedback behavioral response are included in the defined behavior category consisting of detailed conditions in the conditional stimulus information is determined by using the deep neural network algorithm, the feedback behavioral response is classified into defined behavior and undefined behavior (anomaly detection).

Further, the behavior classifying operation S742 may further include classifying the detailed behaviors in the feedback behavioral response into a normal behavior and an abnormal behavior by comparing the detailed behaviors in the feedback behavioral response with behaviors in the defined behavior category.

In the feedback operation S743, the undefined behavior among the feedback behavioral responses is provided to an external terminal (expert terminal), and the external terminal (expert terminal) receives feedback on the definition information of the feedback behavioral response that is the undefined behavior and additionally defines the definition information of the feedback behavior response as a new abnormal behavior in the defined behavior category within the database.

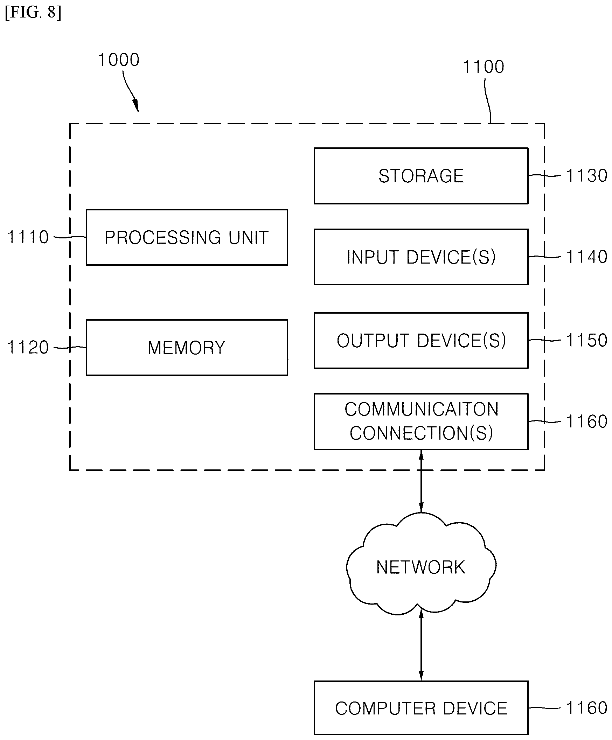

FIG. 8 is a diagram illustrating an example of a computing environment in which one or more exemplary embodiments described in the present specification are implementable, and illustrates an example of a system 1000 including a computing device 1100 configured to implement the one or more exemplary embodiments. For example, the computing device 1100 includes a personal computer, a server computer, a handheld or laptop device, a mobile device (mobile phone, PDA, media player, and the like), a multiprocessor system, a consumer electronic device, a minicomputer, a mainframe computer, and distributed computing environments including any of the foregoing systems or devices, and the like, but is not limited thereto.

The computing device 1100 may include at least one processing unit 1110 and a memory 1120. Herein, the processing unit 1110 may include, for example, a Central Processing Unit (CPU), a Graphic Processing Unit (GPU), a microprocessor, an Application Specific Integrated Circuit (ASIC), and Field Programmable Gate Arrays (FPGA), and may include a plurality of cores. The memory 1120 may be a volatile memory (for example, a Random Access Memory (RAM)), a non-volatile memory (for example, a Read Only Memory (ROM) and a flash memory) or a combination thereof. Further, the computing device 1100 may include an additional storage 1130. The storage 1130 includes a magnetic storage, an optical storage, and the like, but is not limited thereto. The storage 1130 may store computer readable instructions for implementing the one or more exemplary embodiments disclosed herein, and may also store other computer readable instructions for implementing an operating system, an application program, and the like. The computer readable instructions stored in storage 1130 may be loaded into the memory 1120 for execution by the processing unit 1110. Further, the computing device 1100 may include an input device(s) 1140 and an output device(s) 1150.

Herein, the input device(s) 1140 may include, for example, a keyboard, a mouse, a pen, a voice input device, a touch input device, an infrared camera, a video input device, or any other input device. Further, the output device(s) 1150 may include, for example, one or more displays, speakers, printers, or any other output device. Further, the computing device 1100 may also use an input device or an output device included in another computing device as the input device(s) 1140 or the output device(s) 1150.

Further, the computing device 1100 may include a communication connection(s) 1160 that enables the computing device 1100 to communicate with another device (for example, a computing device 1300).

Herein, the communication connection(s) 1160 may include a modem, a Network Interface Card (NIC), an integrated network interface, a radio frequency transmitter/receiver, an infrared port, a USB connection, or other interface for connecting the computing device 1100 to other computing devices. Further, the communication connection(s) 1160 ay include a wired connection or a wireless connection. Each component of the above-described computing device 1100 may be connected by various interconnections, such as a bus (for example, peripheral component interconnection (PCI), USB, firmware (IEEE 1394), optical bus structure, etc.) and may be interconnected by the network 1200. As used herein, terms such as "component" and "system" generally refer to a computer-related entity that is hardware, a combination of hardware and software, software, or software in execution.

For example, the component may be a process running on a processor, a processor, an object, an executable object, an execution thread, a program, and/or a computer, but is not limited thereto. For example, both the application running on a controller and the controller may be the components. One or more components may reside within a process and/or thread of execution, and the components may be localized on one computer or distributed between two or more computers.

The foregoing exemplary embodiments are illustrative, and those skilled in the art will appreciate that various modifications, additions and substitutions are possible in the range without departing from the essential characteristic of the present invention. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the scope of the present invention.

## Claims

1. A method of classifying an abnormal behavior based on a deep neural network algorithm, the method comprising:
measuring and classifying a feedback behavior of an experiment target with respect to conditional stimulus information predefined in a database in a limited environment and storing the classified feedback behavior in the database;
presenting, by a stimulus transmitting unit, the conditional stimulus to the target;
acquiring, by a stimulus measuring unit, data for a feedback behavior response of the experiment target with respect to the conditional stimulus; and
classifying an abnormal behavior among human body data for the feedback behavior responses by using a deep neural network algorithm.

2. The method of claim 1, further comprising:
determining whether the abnormal behavior is normal or abnormal.

3. The method of claim 1, wherein the classifying of the abnormal behavior includes classifying undefined behavior (detecting anomaly) for behavior departing from a defined category.

4. The method of claim 3, further comprising:
additionally defining a classification target that does not belong to an existing classification system in the classification of the undefined behavior as new abnormal behavior through a feedback of an expert.

5. The method of claim 1, wherein the limited environment is an environment operated with contents produced in the form of a game or training having specific rules, and
the abnormal behavior is a behavior that deviates from a predefined normal behavior in the limited environment.

6. The method of claim 1, wherein the data includes one or more of joint data, depth data, color data, sound data, location data, and moderator input information through the stimulus measuring unit, and includes a merged form of data output from a plurality of sensors.

7. The method of claim 1, wherein the conditional stimulus information is indication information in which at least one or more of location information, object designation information, sound indication information, color indication information, and behavior indication information in a limited environment are arranged.

8. A system for classifying an abnormal behavior based on a deep neural network algorithm, the system comprising:
a stimulus transmitting unit configured to present conditional stimulus information to an experiment target;
a stimulus measuring unit configured to collect feedback behavior response information of the experiment target with respect to the conditional stimulus; and
a deep learning information processing unit configured to provide the conditional stimulus information to the stimulus transmitting unit, receive the feedback behavior response information collected by the stimulus measuring unit, and classify an abnormal behavior among the feedback behavior responses by using a deep neural network algorithm.

9. The system of claim 8, wherein the stimulus measuring unit collects human body data that is the feedback behavior response information of the experiment target by using at least one of a three-dimensional depth sensor, a two-dimensional camera, an ultrasonic sensor, an infrared sensor, a laser scanner, a microphone, a position recognition sensor, and a motion recognition sensor.

10. The system of claim 8, wherein at least one of the stimulus transmitting unit and the stimulus measuring unit is movable or fixed in position within the limited environment.

11. The system of claim 8, wherein the deep learning information processing unit includes:
a conditional stimulus information providing unit configured to provide conditional stimulus information suitable for individual characteristics of the experiment target to the stimulus transmitting unit;
a condition classifying unit configured to sub-classify behavior information in feedback response information of the experiment target into conditions in conditional response information; and
a behavior information classifying unit configured to determine time-series or non-time-series relationship of the behaviors sub-classified by the condition classifying unit by using a deep neural network algorithm, and then determine whether the sub-classified behaviors are included in a defined behavior category consisting of detailed conditions within the conditional stimulus information set in a database, and classify the feedback behavior response information into a defined behavior and an undefined behavior (anomaly detection).

12. The system of claim 11, wherein the behavior information classifying unit classifies the detailed behaviors into a normal behavior and an abnormal behavior by comparing the detailed behaviors in the feedback behavior response and behaviors in a defined behavior category.

13. The system of claim 11, further comprising:
a feedback processing unit configured to provide information classified as an undefined behavior among the feedback behavior responses of the experiment target to an external terminal, receive a feedback of definition information of the feedback behavior response that is the undefined behavior from the external terminal, and additionally define the definition information of the feedback behavior response as a new abnormal behavior in a defined behavior category in a database.
